Europäisches Patentamt

European Patent Office

Office européen des brevets

(19)

(11) EP 0 879 734 A1

(12) DEMANDE DE BREVET EUROPEEN

(43) Date de publication:
25.11.1998 Bulletin 1998/48

(51) Int. Cl.$^6$: B60P 3/04

(21) Numéro de dépôt: 98401229.4

(22) Date de dépôt: 20.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 21.05.1997 FR 9706193

(71) Demandeur:
Espace Design Immobilier
45800 Saint Jean de Braye (FR)

(72) Inventeur: Kakko-Chiloff, Anne
45750 St-Pryve-St Mesmin (FR)

(74) Mandataire:
Coester, Jacques Charles
Cabinet Madeuf
7, rue de Monceau
75008 Paris (FR)

(54) Ensemble à hublot et contre-hublot pour véhicules de transport de personnes, d'animaux ou similaires

(57) Ensemble à hublot et contre-hublot comprenant un hublot (11) ayant un emmanchement (15) de longueur "a" et un contre-hublot (16) ayant un emmanchement (18) de longueur "c", en étant réalisé de telle façon que l'emmanchement (15) du hublot (11) soit ajusté à la partie intérieure de l'emmanchement (18) du contre-hublot (16) et qu'il soit coulissant ; le contre-hublot (16) comporte des barreaux (19) d'un diamètre "d", les barreaux (19) étant tangents à la face extérieure d'une collerette de fixation (17) d'épaisseur "b" du contre-hublot et espacés de telle façon qu'un museau d'animal ne puisse pas passer entre eux, en vérifiant en outre la relation $c = a + d - b$.

Fig.2

EP 0 879 734 A1

**Description**

La présente invention concerne un ensemble à hublot et contre-hublot pour véhicules de transport de personnes, d'animaux ou similaires.

Bien que l'invention soit décrite ci-après dans une application à un camion destiné au transport de chevaux, il est bien évident que la même technologie pourra s'appliquer à tout autre véhicule où l'installation d'un hublot sera nécessaire, et par exemple à un véhicule de transport de fonds.

Les camions pour le transport de chevaux sont réalisés en simple tôle ou plus souvent en tôle à double paroi pour apporter à l'animal un confort par isolation thermique. Dans de tels camions, les animaux sont rangés en général en quinconce en travers du camion et des hublots sont pratiqués dans les parois, pour le confort des animaux, face à leurs museaux. Ces hublots portent généralement deux vitres dont l'une est coulissante.

Conformément à l'invention, l'ensemble à hublot et contre-hublot est caractérisé en ce qu'il comprend un hublot ayant un emmanchement de longueur "a" et un contre-hublot ayant un emmanchement de longueur "c", en étant réalisé de telle façon que l'emmanchement du hublot soit ajusté à la partie intérieure de l'emmanchement du contre-hublot et qu'il soit coulissant, le contre-hublot comporte des barreaux d'un diamètre "d", les barreaux étant tangents à la face extérieure d'une collerette de fixation d'épaisseur "b" du contre-hublot et espacés de telle façon qu'un museau d'animal ne puisse pas passer entre eux, en vérifiant en outre la relation $c = a + d - b$.

Conformément à d'autres caractéristiques de l'invention :

-    les longueurs "a" et "c" des emmanchements respectifs du hublot et du contre-hublot sont déterminées de façon à couvrir une gamme d'épaisseur de paroi du véhicule ou autre sur lequel est monté ledit ensemble ;

-    il est prévu une cale, dont la forme s'adapte au contre-hublot pour permettre la fixation de l'ensemble sur une paroi simple d'un véhicule ou autre sur lequel est monté ledit ensemble.

-    l'ensemble s'adapte à une épaisseur E de double paroi en vérifiant les égalités $E\,min = c$ et $E\,max = a + c - e$, ou "e" est le recouvrement minimum nécessaire pour assurer l'étanchéité.

Diverses autres caractéristiques de l'invention ressortent d'ailleurs de la description détaillée qui suit.

Des formes de réalisation de l'objet de la présente invention sont représentées, à titre d'exemples non limitatifs, aux dessins annexes.

La figure 1 représente en coupe un hublot auquel s'applique la présente invention.

La figure 2 représente en coupe une forme de réalisation de l'ensemble à hublot et contre-hublot conforme à l'invention.

La figure 3 représente une variante de réalisation de l'ensemble à hublot et contre-hublot.

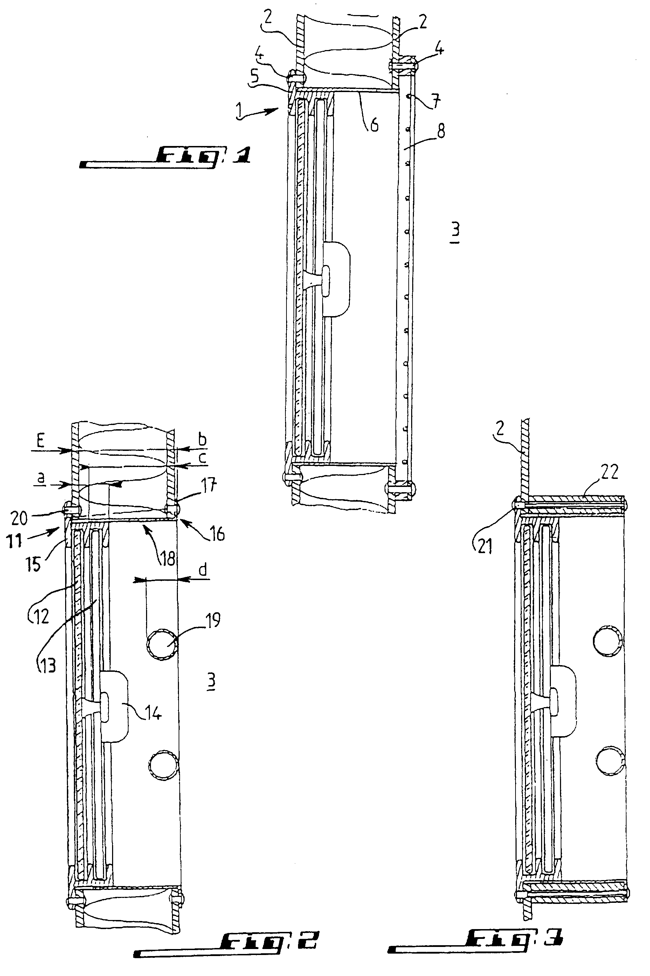

Selon la figure 1, un hublot 1 auquel s'applique la présente invention est fixé sur une double paroi isolante 2-2 d'un camion, représenté de manière générale par la référence 3, par des rivets borgnes 4.

Afin de protéger de la pluie, qui peut pénétrer par l'ouverture, la matière isolante 5 du hublot 1, il est nécessaire d'habiller l'intérieur du trou formé, soit par un joint élastique, soit par une tôle soudée 6.

Dans le premier cas, l'étanchéité n'est jamais parfaite. Dans le deuxième cas, l'opération est délicate et implique une main d'oeuvre onéreuse.

Par ailleurs, du fait de sa fragilité, le hublot 1 devra pouvoir être protégé, des attaques éventuelles de l'animal transporté par le camion 3, à l'aide d'un grillage ou d'une grille 7 fixé sur la paroi intérieure 8 du camion 3.

L'invention consiste en un ensemble composé d'un hublot et d'un contre-hublot selon les figures 2 et 3 et comportant, si nécessaire, une grille intégrée. Cet ensemble s'adapte à l'épaisseur de la paroi ou de la double paroi, se monte en une seule opération, protège la matière isolante du hublot et, dans le cas d'une grille intégrée, protège les vitres du hublot.

A la figure 2, le hublot 11 comporte, comme il est d'usage, deux vitres 12 et 13 dont l'une peut coulisser au moyen d'un taquet 14.

Le cadre du hublot 11 possède un emmanchement 15 de longueur "a".

Le contre-hublot 16 qui est réalisé en acier inoxydable, par exemple, présente une collerette de fixation 17 d'épaisseur "b" et un emmanchement 18 de longueur "c". Le contre-hublot 16 peut être équipé de barreaux 19, de diamètre "d", espacés de telle façon que l'animal transporté ne puisse pas passer son museau entre eux. Les barreaux 19 sont tangents à la face extérieure de la collerette de fixation 17 de sorte que la relation entre les longueurs a, b, c et d ci-dessus est telle que $c = a + d - b$.

Le hublot 11 et le contre-hublot 16 sont fixés sur les parois doubles du camion 3 au moyen de rivets borgnes 20, du type "pop" par exemple, ou tout simplement par des boulons traversants représentés en 21 à la figure 3.

Soit "E" l'épaisseur de la paroi double ci-dessus, l'épaisseur minimum sera : $Emin = c$ et l'épaisseur maximum sera : $Emax = a + c - e$, où "e" est le recouvrement minimum nécessaire pour assurer l'étanchéité et $c = a + d - b$ comme indiqué plus haut.

A titre d'exemple et sans que cela soit limitatif, si on fixe :
$a = 22$ mm, $b = 2$ mm, $c = 40$ mm, $d = 20$ mm et $e = 2$ mm, on obtient :

$$Emin = 40\ mm$$

Emax = 22 + 40 - 2 = 60 mm.

Si maintenant on fixe : a = 42 mm et c = 60 mm, sans changer les autres dimensions, on obtient :

Emin = 60 mm

Emax = 100 mm

De cette façon, avec seulement deux types d'ensembles selon l'invention à hublot et contre-hublot, on couvre une variation d'épaisseur de paroi allant de 40 à 100 mm.

Le même calcul s'applique au cas où il n'y a pas de grille intégrée et donc pas de barreaux 19, il suffira alors de poser : d = 0.

Dans le cas où le camion n'est pas isolé thermiquement et ne possède qu'une simple paroi 2 selon la figure 3, l'ensemble à hublot et contre-hublot sera fixé au moyen d'une cale d'épaisseur 22, dont la forme s'adapte au contre-hublot, et de boulons traversants 21.

**Revendications**

1. Ensemble à hublot et contre-hublot comprenant un hublot (11) ayant un emmanchement (15) de longueur "a" et un contre-hublot (16) ayant un emmanchement (18) de longueur "c", en étant réalisé de telle façon que l'emmanchement (15) du hublot (11) soit ajusté à la partie intérieure de l'emmanchement (18) du contre-hublot (16) et qu'il soit coulissant, caractérisé en ce que le contre-hublot (16) comporte des barreaux (19) d'un diamètre "d", les barreaux (19) étant tangents à la face extérieure d'une collerette de fixation (17) d'épaisseur "b" du contre-hublot et espacés de telle façon qu'un museau d'animal ne puisse pas passer entre eux, en vérifiant en outre la relation c = a + d - b .

2. Ensemble selon la revendication 1, caractérisé en ce que les longueurs "a" et "c" des emmanchements respectifs du hublot et du contre-hublot sont déterminées de façon à couvrir une gamme d'épaisseur de paroi (2-2) du véhicule (3) ou autre sur lequel est monté ledit ensemble.

3. Ensemble selon l'une des revendications 1 ou 2, caractérisé par une cale (22), dont la forme s'adapte au contre-hublot pour permettre la fixation de l'ensemble sur une paroi simple (2) d'un véhicule ou autre sur lequel est monté ledit ensemble.

4. Ensemble selon l'une des revendications 1 ou 2 caractérisé en ce qu'il s'adapte à une épaisseur E de double paroi en vérifiant les égalités E min = c et E max = a + c - e, où "e" est le recouvrement minimum nécessaire pour assurer l'étanchéité.

Fig. 1

Fig. 2

Fig. 3

4

Office européen
des brevets

**RAPPORT DE RECHERCHE EUROPEENNE**

Numero de la demande

EP 98 40 1229

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP 0 240 401 A (BOIDRON) 7 octobre 1987 * abrégé; figure 1 * | 1,3,4 | B60P3/04 |
| A | DE 31 42 122 A (MEISINGER) 11 mai 1983 * abrégé; figures 1,3 * | 1 | |
| A | GB 369 381 A (CARTWRIGHT) * page 4, ligne 23 – ligne 30; figure 5 * | 1 | |
| A | US 4 128 977 A (SCHUBEIS) 12 décembre 1978 | | |

**DOMAINES TECHNIQUES RECHERCHES (Int.Cl.6)**

B60P
E06B

Le présent rapport a été établi pour toutes les revendications

| Lieu de la recherche | Date d'achèvement de la recherche | Examinateur |
|---|---|---|
| LA HAYE | 31 août 1998 | Nordlund, J |